# EUROPEAN PATENT SPECIFICATION

(11) **EP 1 133 653 B1**
(45) Date of publication and mention of the grant of the patent: **14.12.2005**
(21) Application number: 99956048.5
(22) Date of filing: 08.11.1999
(51) Int. Cl.: F16L 9/16, F16L 9/18

(54) **METHOD OF MAKING A PIPE, AND A PIPE**
ROHR UND DAZU GEHÖRIGES HERSTELLUNGSVERFAHREN
PROCEDE DE FABRICATION D'UN TUYAU ET TUYAU AINSI PRODUIT

(30) Priority: 09.11.1998 FI 982427
(43) Date of publication of application: 19.09.2001
(73) Proprietor: Uponor Innovation AB, 513 81 Fristad (SE)
(72) Inventor: JÄRVENKYLÄ, Jyri, FIN-15870 Hollola (FI)
(74) Representative: Huhtanen, Ossi Jaakko
(86) International application number: PCT/FI1999/000930
(87) International publication number: WO 2000/028249

(56) References cited:
- EP-A2- 0 379 088
- DE-A1- 4 212 648
- DE-A1- 4 326 503
- DE-A1- 19 702 460
- US-A- 4 630 650
- US-A- 4 838 317
- US-A- 5 265 648
- US-A- 5 316 606
- US-A- 5 385 173
- US-A- 5 487 411
- US-A- 5 671 778

## Description

The invention relates to a method of making a pipe, in which method a semi-finished product is formed into a mechanically strong outer pipe, and a tight inner layer is formed inside the outer pipe.

The invention further relates to a pipe comprising a mechanically strong outer pipe that is made from a semi-finished product, and an inner layer situated inside the outer pipe.

EP 0,184,366 discloses an arrangement where a strip is wound helically so that it forms a pipe. This pipe is fed into an old sewer pipe as a liner, and grout is pumped into the space between the old sewer pipe and the liner. It is very difficult to make the helically wound pipe sufficiently tight, and the inner surface of the pipe is not usually sufficiently smooth either. Further, as a whole this method is complicated and difficult. EP 0,379,493 discloses a similar arrangement, including means for locking adjacent strips together during the winding, and means for unlocking them. This arrangement has similar drawbacks as disclosed above.

DD 263,952 and EP 0,606,349 also disclose the making of a pipe by winding a strip into a helix. These references also disclose different stiffeners and reinforcements that are used to improve the ring stiffness of the pipe. Also in these arrangements, the problems include that the pipe will not be very tight and the inner surface will not be very smooth.

US 3,388,425 and WO 97/01429 disclose an arrangement where a strip is wound into a helix to make an outer pipe, and molten plastic is extruded into the outer pipe. This arrangement is complicated and difficult and it cannot therefore be implemented for example in site conditions, which means that the costs of transportation to the place of use will be very high especially when pipes of great diameter are used. Further, due to its structure the finished pipe will be rather expensive.

US-A-4,838,317 discloses a pipe having a channeled wall defining a plurality of outwardly projecting structural ribs and a hydraulically smooth interior surface. US-A-4,630,650 discloses a spiral ribbed pipe formed from an elongate strip coiled helically.

The purpose of the present invention is to provide a method and a pipe which avoid the aforementioned drawbacks.

The method according to the invention is characterized by the features of claim 1.

Further, the pipe according to the invention is characterized by the features of claim 7.

The basic idea of the invention is that the pipe consists of an outer pipe providing mechanical strength and an inner layer providing tightness, and that the outer pipe and the inner layer are formed from semi-finished products that require substantially less space during storage than a finished pipe. The idea of a preferred embodiment is that the semi-finished product forming the outer pipe is a profile that is wound into a helix so that it forms the outer pipe, and it is coated from the inside before use so that a flexible inner lining is fed into the interior of the pipe, the lining is rounded against the outer pipe, and the inner lining and the outer pipes are joined so that the inner lining forms an inner layer that acts as a flow surface. The idea of a preferred embodiment is that the semi-finished products forming the outer pipe and the inner layer are delivered separately near the place of use of the pipe, and the pipe is made near the place of use.

The invention has the advantage that the pipe is simple, fast and inexpensive to manufacture. When the pipe is made near the place of use, the costs of transportation can be reduced substantially. Further, the pipe wall can be made tight, the pipe joints can be implemented easily, and the pipe connection becomes tight. Also, the inner surface of the pipe is very smooth and thus favourable for the flow. The inner surface of the pipe is also highly wear-resistant.

The invention will be described in greater detail in the accompanying drawings, in which
Figure 1 is a schematic side view, in partial cross-section, of the first steps of making a pipe according to the invention,
Figure 2 is a cross-sectional view of the arrangement of Figure 1 along line A-A,
Figure 3 is a schematic cross-sectional side view of the steps of making a pipe according to the invention,
Figure 4 is a schematic cross-sectional side view of a pipe according to the invention,
Figure 5 is a schematic cross-sectional view of a profile forming an outer pipe of the pipe according to the invention,
Figures 6a and 6b show schematically different cross-sectional shapes of the profile forming the outer pipe,
Figure 7 is a schematic cross-sectional side view of connecting the pipe according to the invention to a drain pit, and
Figure 8 is a schematic cross-sectional side view of a pipe end according to the invention.

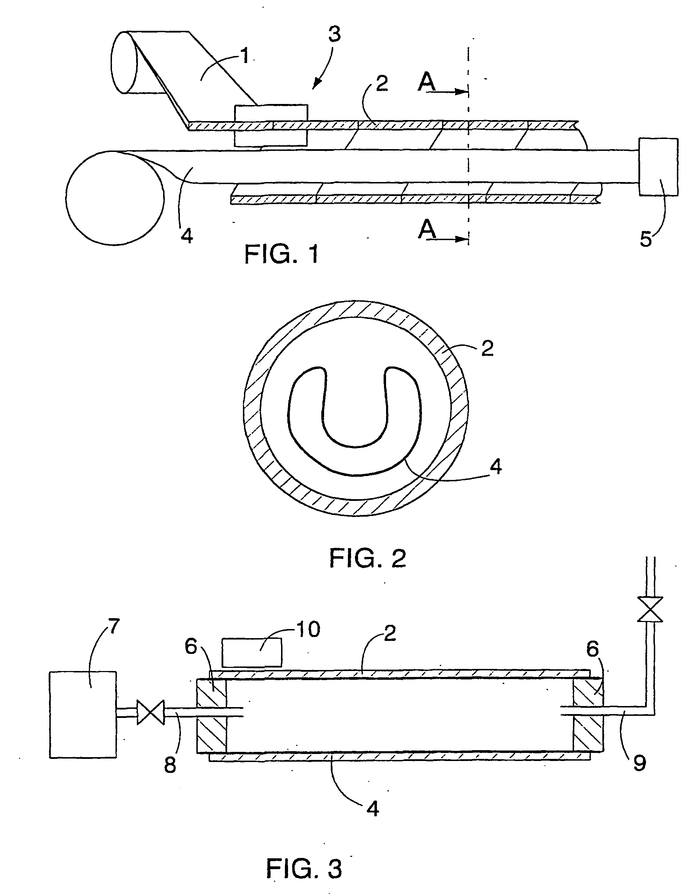

Figure 1 shows a profile 1 that is wound into a helix so that it forms an outer pipe 2. Means 3 for making the outer pipe 2 are shown in the figure in a very simplified form since the structure and operation thereof are fully known to a person skilled in the art. An inner lining 4 is supplied to the interior of the outer pipe 2 for example with a pulling device 5. The profile 1 and the inner lining 4 are semi-finished products from which the pipe according to the invention is made. The term "semi-finished product" refers in the present application to a product that can be formed into a pipe substantially by means of mechanical measures only. If desired, the semi-finished products can be heated to some extent in order to facilitate the mechanical processing. Most preferably, the profile 1 and the inner lining 4 are delivered near the place of use wound into a coil, so that these semi-finished products take substantially less space during storage and transportation than a finished pipe, and the pipe is manufactured near the place of use. Especially when using sewer pipes with a large diameter varying for example from 800 to 3000 mm, the costs of transportation can be reduced considerably. The outer pipe 2 provides the pipe with sufficient mechanical strength, so that the pipe withstands the effect of external forces and internal pressure and the joint effect of both. The inner lining 4 provides the pipe with sufficient tightness.

Figure 2 shows in cross-section the outer pipe 2 and the inner lining 4 that is bent at this stage in such a way that the outer dimensions of its cross-section are clearly smaller than the inner diameter of the outer pipe 2, wherefore the inner lining 4 can be easily supplied to the outer pipe 2. The inner lining 4 may be made of, for example, any plastic that can be made to adhere to the outer pipe 2 providing the structural strength. The ring stiffness of the inner-lining 4 should be small so that the lining can be wound rather easily into a flat hose. The rounding of the lining against the inner surface of the outer pipe 2 occurring at a later stage also requires rather small ring stiffness. The ring stiffness cannot be minimal, however, since it is rather difficult to handle a film-like inner lining. The thickness of the inner lining 4 depends on the intended use of the pipe. If the pipe is used as a normal sewer pipe, the wear resistance is not a big problem if the amount of sand conveyed in the water is not greater than usual, and if the gradient of the pipe is not steeper than usual, in other words if the water flow rate is normal. Typically, during one hundred years the plastic wears about 0.5 mm. In such a case, the total thickness of the inner lining 4 may be about 3 mm, for example. Ideal material for the inner lining 4 is thus very flexible so that the lining could be packed easily, and it should also be highly wear-resistant. By adjusting the thickness it is possible to select suitable ring stiffness, and the thermal stability of the inner surface of the inner lining 4 should be such that the inner lining 4 does not melt completely when its outer surface is attached to the outer pipe 2 for example through welding. A very good material for the inner lining 4 is for example cross-linked polyethylene that is chemically modified to be more flexible than usual. Such materials include Borflex™ elastomers manufactured by Borealis A/S. The softness of the material can be adjusted by varying the acrylate content, for example such that very high pressures are not needed in the rounding stage. For the sake of work safety, a rounding pressure of less than 1 bar is desirable. The material is particularly suitable for this purpose due to its cross-linking property. When the material is cross-linked, it can be welded to the outer pipe without melting into an unusable form. All known methods can be used for the cross-linking. Cross-linking with silane is particularly suitable since such cross-linking is formed in the material spontaneously by the action of water. In such a case, the inner lining can be cross-linked first, if necessary, to a low degree of cross-linkage, such as 35%, so that the inner lining can be welded without melting. The final cross-linking in the actual inner lining and/or the outer pipe occurs due to humidity during use. If the outer pipe 2 is made of normal polyethylene, the inner lining 4 and the outer pipe 2 can be joined by welding. By providing the outer surface of the inner lining 4 with an adhesive layer, the inner lining 4 and the outer pipe 2 can be joined rather easily.

Figure 3 shows a step where the inner lining 4 is rounded against the outer pipe 2. At each end of the inner lining 4 there is a plug 6. Air is pumped into the inner lining 4 with a pump 7 via a feed pipe 8. The inner lining 4 is thus rounded with a low internal pressure against the outer pipe 2. Some of the air may flow out via a discharge pipe 9. Valves provided in the feed pipe 8 and the discharge pipe 9 are used to adjust the air flow to a suitable level, With small flow-through it is possible to easily control the pressure and the temperature. If desired, the input air can be preheated. After the rounding, the outer pipe 2 and the inner lining 4 are heated with a heating device 10. The heating device 10 may be, for example, a flameless gas jet, an infrared lamp or an electric resistor or some other similar device. With the heating device 10 the inner lining 4 and the outer pipe 2 can be welded together. Instead of welding, it is possible to also use for example thermally activated adhesives. If desired, the welding can also be carried out for example inside the inner lining 4 with a moving head that comprises a rotating arm. The arm is connected to a preheating roller that presses the inner lining 4 to the pipe. This is followed by a heating unit and possibly a second roller that cools the inner surface of the inner lining 4. The inner lining 4 is thus welded to the outer pipe 2 along a helical path. Further, the interior of the pipe may be provided with an infrared heater, as shown with a broken line in Figure 3, for implementing the infrared welding, the heater being moved or moving by itself.

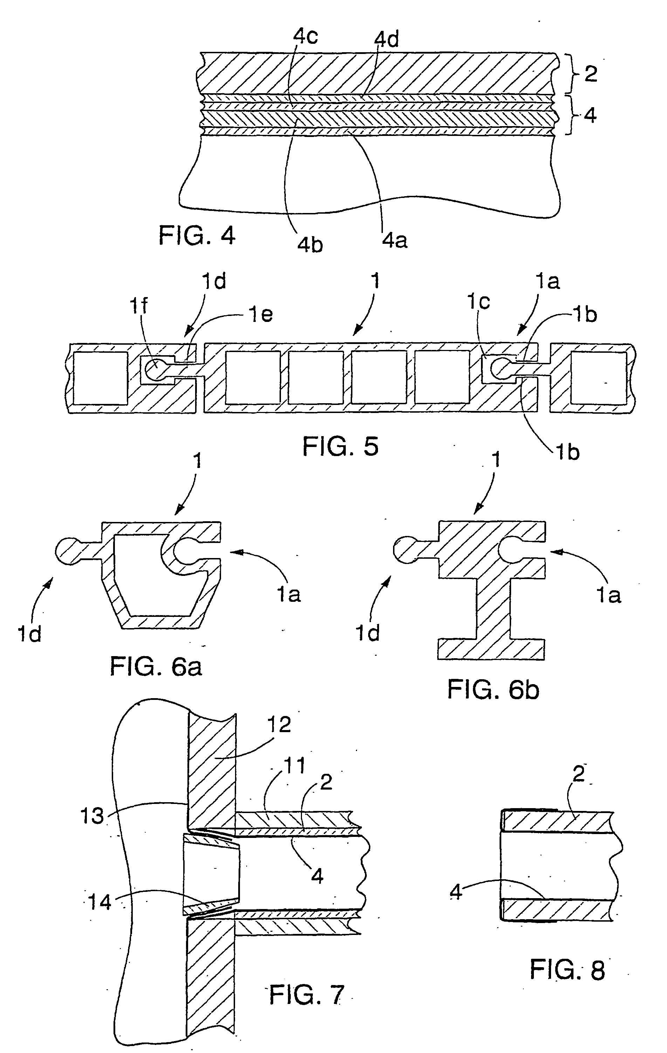

Figure 4 shows a cross-section of a pipe wall according to the invention. The material of the outer pipe 2 has a rather high elastic modulus and, in particular, the elastic strain of the material should be high so that the profile forming the outer pipe can be wound into a coil without being permanently damaged. The outer pipe 2 can be made of any material to which it is possible to permanently attach, for example by gluing or welding, a plastic inner lining. The material of the outer pipe 2 may be, for example, steel to which a plastic inner surface is attached for example mechanically, and the inner lining 4 can be welded to this inner surface. The outer pipe 2 may also be a plastic composite structure whose mechanical strength is improved with continuous and/or staple fibres. A composite structure provides high tensile strength and a high modulus. High tensile strength is useful when the method according to the invention is used to manufacture pressure pipes, in which case the outer pipe acts as a component providing pressure resistance. Conventional continuous glass fibres or the like can then be extruded into the profile in the axial direction, and when the profile is wound into a pipe, the fibre reinforcement is oriented in a desired manner in the circumferential direction. Alternatively, the profile itself can be manufactured with an orientation process, for example as disclosed in WO97/10941, and possibly with a multilayer structure so that the outer surface is formed from an easily weldable material.

The inner lining 4 may consist of one or several coextruded layers. The inner layer 4a of the inner lining 4 may be made of conventional or cross-linked plastic with a thickness of, for example, about 2 mm that is coated with a thin layer of foam 4b. The inner lining 4 may also comprise unattached or laminated textile reinforcements that improve the rigidity and pressure resistance of the inner lining 4. The inner lining 4 may also comprise a separate fibre layer 4c to improve the aforementioned properties. The pressure resistance of the inner lining 4 is particularly important in cases where the structure of the outer pipe 2 is not very tight as such. The inner lining 4 may also comprise an outermost adhesive layer 4d that is heated and welded easily to the next layer. For example in a conventional polyethylene hose, the outermost adhesive layer 4d may consist of polyethylene blended with carbon black or thermally activated adhesive that absorbs the heat when the pipe is heated for example with infrared radiation.

Figure 5 shows a cross-sectional shape of a profile 1 constituting the outer pipe 2. Adjacent profiles can be joined for example such that one side of the profile 1 comprises a groove 1a and the other side comprises a pointed edge 1d, and the joint thus consists of a pointed edge 1d inserted into a continuous groove 1a. The same profile 1 can thus be coiled into outer pipes 2 of different diameters. In such a case, pipes of different sizes will naturally have different ring stiffnesses. However, ring stiffness of a pipe is not very significant for the deformation of the pipe after it has already been installed, if the surrounding soil is well tamped. Therefore, different ring stiffnesses are not especially harmful as long as a pipe of a greater diameter has such a bending resistance that it is able to carry the load caused by the tamping without-collapsing during the installation. Sufficient ring stiffness of the outer pipe is about 4 kN/m². For small diameters, higher profiles are often used to easily obtain ring stiffnesses of from 6 to 16 kN/m². Greater stiffnesses are not usually needed. On the other hand, when handling very large pipes (>1 m) the ring stiffness of the pipe itself can often be replaced with careful and controlled installation. In such a case, the stiffness of the pipe may be only 0.5 kN/m². In the United States, there is a so-called AASHTO system that allows the ring stiffness to decrease as the diameter increases. When a pipe is made from one standard profile, this method is highly advantageous since it is not necessary to have a separate semi-finished product for each pipe dimension. The groove 1a may also comprise anti-skid means the purpose of which is to prevent the diameter from changing after the coiling. The groove 1a comprises a cavity 1c that is spaced from the side of the profile 1 by a gap provided between the groove edges 1b. The pointed edge 1d comprises a neck 1e, which is provided at its end with a head 1f that is thicker than the neck 1e. Thus, as the adjacent profiles 1 are being joined, the head 1f is pushed through the gap between the edges 1b to the cavity 1c. The head 1f is made slightly bigger than the gap between the edges 1b of the groove so that the joint will be tight. The neck 1e is preferably longer than the gap between the groove edges 1b, so that the pipe can be for example bent easily, since the joint allows adjacent points in the helically wound profile 1 to be moved with respect to one another in the axial direction. When the outer and inner layer are heated in order to be joined together, the heating can be adjusted to such a level that the parts forming the outer pipe 2 are glued together for example such that the neck 1e adheres to the edge 1b of the groove.

The cross-sectional shape of the profile 1 may be, for example, an almost square form, as shown in Figure 6a. Preferably in the case of Figure 6a, the longer side forms the outer surface of the outer pipe 2 since the inner surface will be provided with a separate flow surface providing tightness and wear resistance. Further, the cross-section may also have the shape of substantially an I beam as shown in Figure 6b. The groove 1a and the pointed edge 1d may be fitted for example in the central part of the profile 1 or most preferably near the upper surface of the profile 1 that will be the outmost surface in the outer pipe 2. This is advantageous since the groove 1a and the pointed edge 1d cause mass concentration, which increases the bending resistance when it is far from the neutral axis.

A pipe according to the invention is typically made near the place of use, and it does not necessarily require joints as the pipe extends from one pit to another. The inner lining 4 thus also extends into the pit. The pipe is attached to the pit 12 with a supporting sleeve 11 as shown in Figure 7. The inner surface of the pit 12 can be made tight by providing the pit on the inside with a liner 13. Preferably, the pit liner 13 and the inner lining 4 are substantially similar. The pit liner 13 can be connected to the inner lining 4 of the pipe easily by pressing them together for example with an inner wedge-shaped sleeve 14, so that the pipe connection to the pit can be made very tight.

Figure 8 shows an arrangement where the inner lining 4 forming the inner layer is stretched to extend over the pipe end onto the outer surface of the pipe. The inner lining 4 thus forms a tight and smooth outer surface in the area where the pipe connection is situated, for example.

The drawings and the description related thereto are only intended to illustrate the inventive idea. The semi-finished product from which the outer pipe is made does not necessarily have to be a profile 1, but the outer pipe 2 can also be formed for example from components that are assembled to form the outer pipe 2. It is essential, however, that the components from which the outer pipe 2 is assembled require less space during storage than a finished pipe. Further, the tubular inner lining 4 can be rounded into a tubular shape already before it is inserted into the outer pipe 2. Further, the semi-finished product from which the inner layer is made can be, for example, a flexible strip-like profile. In such a case, when the pipe is being made the profile forming the outer pipe and the profile forming the inner layer are wound preferably crosswise. Such a profile forming the inner layer may be made from, for example, a two-layer laminated strip where the layers are formed from cross-linked polyethylene, or the outer surface of the strip may comprise for example thermally activated adhesive. Adjacent edges of the profile forming the inner layer are then joined together and the outer surface of the profile is connected to the outer pipe. If desired, there may be several inner layers inside the outer pipe.

## Claims

1. A method of making a pipe, comprising
delivering a semi-finished product forming an outer pipe (2), and a flexible inner lining (4) forming a tight inner layer of the pipe near the place of use of the pipe as an underground pipe, the semi-finished product forming the outer pipe (2) and the flexible inner lining (4) requiring substantially less space during storage than a finished pipe,
forming a mechanically strong outer pipe (2) from the semi-finished product forming the outer pipe(2) near the place of use,
inserting the flexible inner lining (4) into the outer pipe (2), rounding the inner lining (4) against the outer pipe (2) by inflating, and
joining the flexible inner lining (4) and the outer pipe (2),
wherein the semi-finished product forming the outer pipe (2) and the flexible inner lining (4) are formed into a pipe substantially by means of mechanical measures only.

2. A method according to claim 1**, characterized in that** the semi-finished product forming the outer pipe (2) is a profile (1) that is wound into a helix in order to make the outer pipe (2).

3. A method according to any one of the preceding claims, **characterized in that** the inner layer and the outer pipe (2) are joined by means of heat.

4. A method according to claim 3, **characterized in that** the thermal effect is adjusted to such a level that the parts of the semi-finished product forming the outer pipe (2) adhere together by the action of the heat.

5. A method according to any one of the preceding claims, **characterized in that** the outer pipe (2) is made of polyethylene.

6. A method according to any one of the preceding claims, **characterized in that** the inner layer is made of cross-linked polyethylene that is chemically modified to be more flexible than usual.

7. A pipe comprising a mechanically strong outer pipe (2) that is made from a semi-finished product near the place of use of the pipe as an underground pipe, and a flexible inner lining (4) that is inserted into and attached inside the outer pipe (2), whereby the semi-finished product forming the outer pipe (2) and the flexible inner lining (4) are such that they can be formed into a pipe substantially by means of mechanical measures only and require substantially less space during storage than a finished pipe, and that the inner lining (4) is a tubular hose that is rounded against the outer pipe (2) by inflating.

8. A pipe according to claim 7, **characterized in that** the outer pipe (2) is formed from a profile (1) by winding it into a helix.

9. A pipe according to claim 8, **characterized in that** one side of the profile (1) is provided with a groove (1a) and the other side is provided with a pointed edge (1d), so that when the profile (1) is wound into a helix, the pointed edge (1d) is placed inside the groove (1a).

10. A pipe according to claim 9, **characterized in that** the groove (1a) and the pointed edge (1d) are placed near the surface of the profile (1) forming the outer surface of the outer pipe (2).

11. A pipe according to claim 9 or 10, **characterized in that** the pointed edge (1d) comprises a neck (1e) and a head (1f) that is larger than the neck (1e), and the groove (1a) comprises a cavity (1c) that is spaced from the side of the profile (1) by a gap situated between the edges (1b), the neck (1e) being longer than the gap provided between the edges (1b), so that adjacent points in the helically wound profile (1) are able to move with respect to each other in the axial direction.

12. A pipe according to any one of claims 7 to 11, **characterized in that** the outer pipe (2) is made of polyethylene.

13. A pipe according to any one of claims 7 to 12, **characterized in that** the inner layer is made of cross-linked polyethylene that is chemically modified to be more flexible than usual.

14. A pipe according to any one of claims 7 to 13, **characterized in that** the inner layer is arranged to extend over the pipe end onto the outer surface of the pipe.

## Patentansprüche

1. Verfahren zum Herstellen eines Rohrs, mit folgenden Schritten:
Bereitstellen eines Halbzeugs zur Bildung eines Außenrohrs (2), und einer flexiblen Innenauskleidung (4) zur Bildung einer eng anliegenden Innenschicht des Rohrs, nahe der Stelle, an der das Rohr als Erdrohr verwendet werden soll, wobei das das Außenrohr (2) bildende Halbzeug und die flexible Innenauskleidung (4) während der Lagerung wesentlich weniger Raum beanspruchen als ein fertiges Rohr,
Bilden eines mechanisch festen Außenrohrs (2) aus dem zum Bilden des Außenrohrs (2) vorgesehenen Halbzeug nahe der Verwendungsstelle,
Einführen der flexiblen Innenauskleidung (4) in das Außenrohr (2), Runden der Innenauskleidung (4) gegen das Außenrohr (2) durch Aufblasen, und
Verbinden der flexiblen Innenauskleidung (4) und des Außenrohrs (2),
wobei das das Außenrohr (2) bildende Halbzeug und die flexible Innenauskleidung (4) im Wesentlichen nur durch mechanische Maßnahmen zu einem Rohr ausgebildet werden.

2. Verfahren nach Anspruch 1, **dadurch gekennzeichnet, dass** das das Außenrohr (2) bildende Halbzeug ein Profil (1) ist, das zur Bildung des Außenrohrs (2) zu einer Helix gewickelt wird.

3. Verfahren nach einem der vorhergehenden Ansprüche, **dadurch gekennzeichnet, dass** die Innenschicht und das Außenrohr (2) durch Wärme miteinander verbunden werden.

4. Verfahren nach Anspruch 3, **dadurch gekennzeichnet, dass** der Wärmeeffekt auf ein derartiges Maß eingestellt wird, dass die Teile des das Außenrohr (2) bildenden Halbzeugs durch den Einfluss der Wärme aneinander anhaften.

5. Verfahren nach einem der vorhergehenden Ansprüche, **dadurch gekennzeichnet, dass** das Außenrohr (2) Polyethylen aufweist.

6. Verfahren nach einem der vorhergehenden Ansprüche, **dadurch gekennzeichnet, dass** die Innenschicht vernetztes Polyethylen aufweist, das chemisch derart modifiziert ist, das es flexibler als üblich ist.

7. Rohr mit einem mechanisch festen Außenrohr (2), das nahe der Stelle, an der das Rohr als Erdrohr verwendet werden soll, aus einem Halbzeug gebildet ist, und einer flexiblen Innenauskleidung (4), die in das Außenrohr (2) eingeführt und in diesem befestigt ist, wobei das das Außenrohr (2) bildende Halbzeug und die flexible Innenauskleidung (4) derart vorgesehen sind, dass sie im Wesentlichen nur durch mechanische Maßnahmen zu einem Rohr ausgebildet werden können und während der Lagerung wesentlich weniger Raum beanspruchen als ein fertiges Rohr, und dass die Innenauskleidung (4) ein rohrförmiger Schlauch ist, der durch Aufblasen gegen das Außenrohr (2) gerundet ist.

8. Rohr nach Anspruch 7, **dadurch gekennzeichnet, dass** das Außenrohr (2) aus einem Profil (1) gebildet ist, indem dieses zu einer Helix gewickelt ist.

9. Rohr nach Anspruch 8, **dadurch gekennzeichnet, dass** eine Seite des Profils (1) mit einer Nut (1a) versehen ist und die andere Seite mit einem derartigen vorstehenden Rand (1d) versehen ist, dass, wenn das Profil (1) zu einer Helix gewickelt ist, der vorstehende Rand (1d) in der Nut (1a) platziert ist.

10. Rohr nach Anspruch 9, **dadurch gekennzeichnet, dass** die Nut (1a) und der vorstehende Rand (1d) nahe der Oberfläche des Profils (1) platziert sind, welche die Außenfläche des Außenrohrs (2) bildet.

11. Rohr nach Anspruch 9 oder 10, **dadurch gekennzeichnet, dass** der vorstehende Rand (1d) einen Hals (1e) und einen Kopf (1f) aufweist, der größer als der Hals (1e) ist, und die Nut (1a) einen Hohlraum (1c) aufweist, der durch einen zwischen den Rändern (1b) angeordneten Spalt von der Seite des Profils (1) beabstandet ist, wobei der Hals (1e) derart länger als der zwischen den Rändern (1b) angeordnete Spalt ist, dass benachbarte Punkte in dem helisch gewickelten Profil in der Lage sind, sich in Axialrichtung relativ zueinander zu bewegen.

12. Rohr nach einem der Ansprüche 7 bis 11, **dadurch gekennzeichnet, dass** das Außenrohr (2) Polyethylen aufweist.

13. Rohr nach einem der Ansprüche 7 bis 12, **dadurch gekennzeichnet, dass** die Innenschicht vernetztes Polyethylen aufweist, das chemisch derart modifiziert ist, das es flexibler als üblich ist.

14. Rohr nach einem der Ansprüche 7 bis 12, **dadurch gekennzeichnet, dass** die Innenschicht derart angeordnet ist, dass sie über das Rohrende auf die Außenfläche des Rohrs vorsteht.

## Revendications

1. Procédé de fabrication d'un tuyau, comprenant
la fourniture d'un produit semi-fini formant un tuyau externe (2), et d'un revêtement interne flexible (4) formant une couche interne étanche du tuyau à proximité du lieu d'utilisation du tuyau comme tuyau souterrain, le produit semi-fini formant le tuyau externe (2) et le revêtement interne flexible (4) nécessitant sensiblement moins d'espace pendant le stockage qu'un tuyau fini,
la formation d'un tuyau externe (2) mécaniquement résistant à partir du produit semi-fini formant le tuyau externe (2) à proximité du lieu d'utilisation,
l'insertion du revêtement interne flexible (4) à l'intérieur du tuyau externe (2), en arrondissant le revêtement interne (4) contre le tuyau externe (2) par gonflement, et
l'assemblage du revêtement interne flexible (4) et du tuyau externe (2),
dans lequel le produit semi-fini formant le tuyau externe (2) et le revêtement interne flexible (4) sont formés pour obtenir un tuyau sensiblement uniquement au moyen de mesures mécaniques.

2. Procédé selon la revendication 1, **caractérisé en ce que** le produit semi-fini formant le tuyau externe (2) est un profilé (1) qui est enroulé de façon hélicoïdale afin de fabriquer le tuyau externe (2).

3. Procédé selon l'une quelconque des revendications précédentes, **caractérisé en ce que** la couche interne et le tuyau externe (2) sont assemblés par chaleur.

4. Procédé selon la revendication 3, **caractérisé en ce que** l'effet thermique est réglé à un niveau tel que les parties du produit semi-fini formant le tuyau externe (2) adhèrent conjointement par l'action de la chaleur.

5. Procédé selon l'une quelconque des revendications précédentes, **caractérisé en ce que** le tuyau externe (2) est fabriqué en polyéthylène.

6. Procédé selon l'une quelconque des revendications précédentes, **caractérisé en ce que** la couche interne est fabriquée en polyéthylène réticulé qui est chimiquement modifié pour être plus flexible que d'habitude.

7. Tuyau comprenant un tuyau externe (2) mécaniquement résistant qui est fabriqué à partir d'un produit semi-fini à proximité du lieu d'utilisation du tuyau comme tuyau souterrain, et un revêtement interne flexible (4) qui est inséré et fixé à l'intérieur du tuyau externe (2), le produit semi-fini formant le tuyau externe (2) et le revêtement interne flexible (4) étant tels qu'ils peuvent être formés pour obtenir un tuyau sensiblement uniquement au moyen de mesures mécaniques et nécessitent sensiblement moins d'espace pendant le stockage qu'un tuyau fini, et que le revêtement interne (4) est un flexible tubulaire qui est arrondi contre le tuyau externe (2) par gonflement.

8. Tuyau selon la revendication 7, **caractérisé en ce que** le tuyau externe (2) est formé par un profilé (1) en l'enroulant de façon hélicoïdale.

9. Tuyau selon la revendication 8, **caractérisé en ce qu'**un côté du profilé (1) est pourvu d'une rainure (1a) et l'autre côté est pourvu d'un bord pointu (1d), de sorte que lorsque le profilé (1) est enroulé de façon hélicoïdale, le bord pointu (1d) est placé à l'intérieur de la rainure (1a).

10. Tuyau selon la revendication 9, **caractérisé en ce que** la rainure (1a) et le bord pointu (1d) sont placés à proximité de la surface du profilé (1) formant la surface externe du tuyau externe (2).

11. Tuyau selon la revendication 9 ou 10, **caractérisé en ce que** le bord pointu (1d) comprend un col (1e) et une tête (1f) qui est plus grande que le col (1e), et la rainure (1a) comprend une cavité (1c) qui est espacée du côté du profilé (1) par un espace situé entre les bords (1b), le col (1e) étant plus long que l'espace prévu entre les bords (1b), de sorte que les points adjacents dans le profilé (1) enroulé de façon hélicoïdale sont capables de se déplacer les uns par rapport aux autres dans la direction axiale.

12. Tuyau selon l'une quelconque des revendications 7 à 11, **caractérisé en ce que** le tuyau externe (2) est fabriqué en polyéthylène.

13. Tuyau selon l'une quelconque des revendications 7 à 12, **caractérisé en ce que** la couche interne est fabriquée en polyéthylène réticulé qui est chimiquement modifié pour être plus flexible que d'habitude.

14. Tuyau selon l'une quelconque des revendications 7 à 13, **caractérisé en ce que** la couche interne est agencée pour s'étendre au-dessus de l'extrémité du tuyau sur la surface externe du tuyau.
